# EUROPEAN PATENT APPLICATION

(11) **EP 1 962 289 A2**
(43) Date of publication of application: **27.08.2008**
(21) Application number: 08001970.6
(22) Date of filing: 01.02.2008
(51) Int. Cl.: G11B 33/04

(54) **Container for a disc and the like, with means for disengageable retention of the disc**

(30) Priority: 14.02.2007 IT MI20070276
(71) Applicant: POZZOLI S.p.A., 20065 Inzago (Milano) (IT)
(72) Inventor: Pozzoli, Aldo, 20065 Inzago (MI) (IT)
(74) Representative: Alagem Modiano, Lara S.

(57) **Abstract**

A container (1) for a disc and the like, with means for disengageable retention of the disc, comprising a containment body (2) which has at least one recess (3) which defines a region for accommodating the disc (4) and contact regions (10) for the disc, means (20) for central retention of the disc (4) being further provided, the central retention means (20) being supported by a portion which can oscillate with respect to the bottom of the recess (3) for the disengagement of the central retention means (20) from the disc (4) with a pushbutton actuation on the central retention means (20).

## Description

The present invention relates to a container for a disc and the like with means for disengageable retention of the disc.

As is known, the containers used typically for discs, such as CDs, DVDs and other similar optically- or magnetically-readable discs, are constituted generally by a tray, generally made of plastics, defining internally a recess which accommodates the disc, which is retained in position by means of elastically flexible elements which engage the central hole of the disc or its peripheral region.

In containers with means for retention in the central hole, solutions have already been provided which allow to release the disc automatically by acting in a pushbutton fashion on the element that retains the disc in the central region.

In these embodiments there are inevitably considerable constructive complications in order to achieve release with a pushbutton actuation, since it is necessary to provide a number of elements which in practice lift the disc in order to disengage it from the central retention means.

These embodiments, therefore, are normally considerably complicated and further are subject to yielding due to wear, which leads in a relatively short time to ineffectiveness of the retention of the disc.

The aim of the invention is to solve the problem described above by providing a container for a disc and the like with means for disengageable retention of the disc in which it is possible to use retention means of a new type which allow to use in practice the traditional hubs provided with a plurality of elastically flexible teeth, although it is possible to perform a pushbutton actuation.

Within this aim, an object of the invention is to provide a container in which the central retention means do not produce forcing in the coupling region, consequently preventing the possibility of damaging the disc.

Another object of the present invention is to provide a container which thanks to its particular constructive characteristics is capable of giving the greatest assurances of reliability and safety in use.

Still another object of the present invention is to provide a container for a disc and the like with means for disengageable retention of the disc which can be obtained easily starting from commonly commercially available elements and materials and is also competitive from a merely economical standpoint.

This aim and these and other objects, which will become better apparent hereinafter, are achieved by a container for a disc and the like, with means for disengageable retention of the disc, according to the invention, comprising a containment body which has at least one recess which defines the region for accommodating a disc and contact regions for said disc, means for central retention of said disc being further provided, characterized in that said central retention means are supported by a portion which can oscillate with respect to the bottom of said recess for the disengagement of said central retention means from said disc with a pushbutton actuation on said central retention means.

Further characteristics and advantages of the present invention will become better apparent from the description of a preferred but not exclusive embodiment of a container for a disc and the like, with means for disengageable retention of the disc, illustrated in the accompanying drawings, wherein:

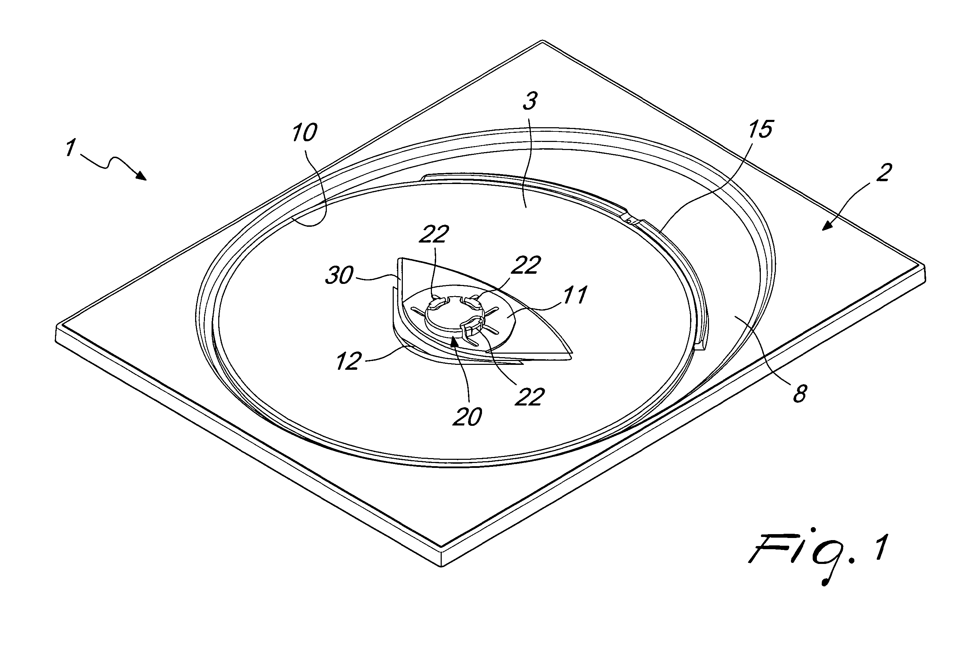

Figure 1 is a perspective view of an embodiment of the container;

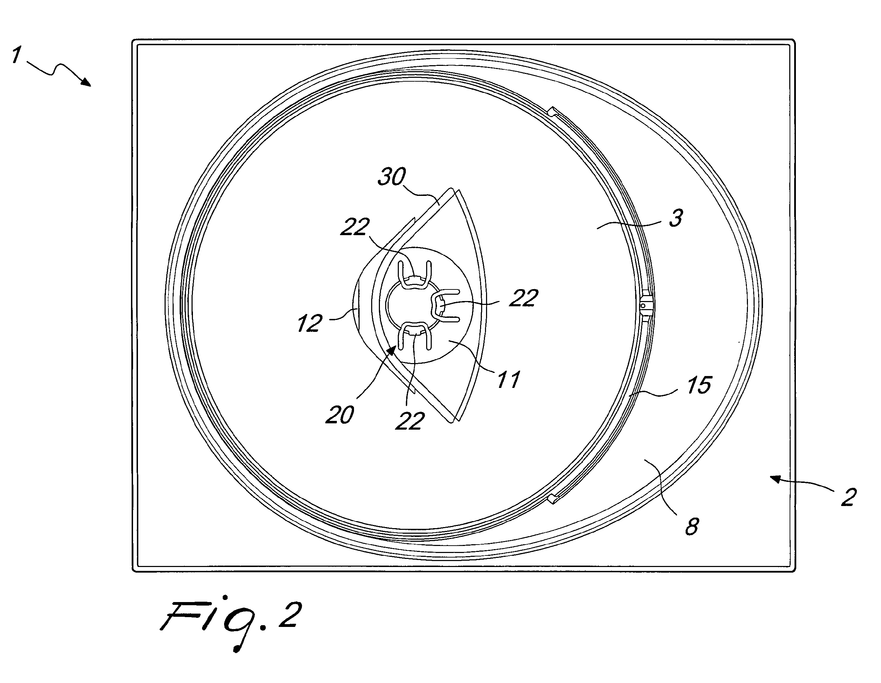

Figure 2 is a plan view of the container;

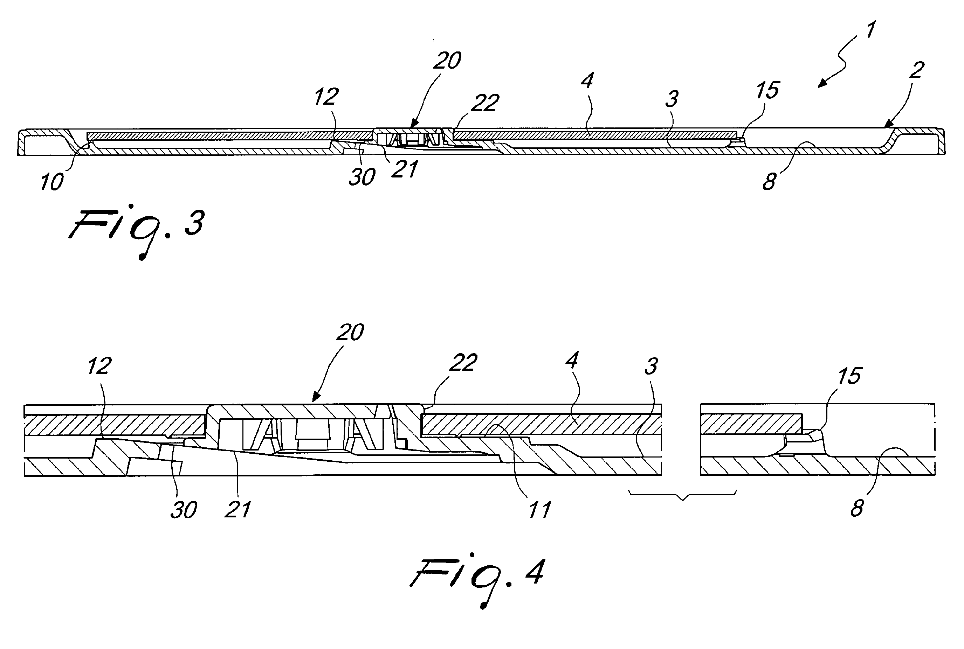

Figure 3 is a sectional view of the container, taken along the line III-III of Figure 2;
Figure 4 is an enlarged-scale view of the cross-section of Figure 3;
Figure 5 is a schematic sectional view of the step for the pushbutton actuation of the central retention means;
Figure 6 is a sectional view of the disc disengaged from the central retention means;
Figure 7 is a view of a box-like element or case with the same central retention means.

With reference to the figures, the container for a disc and the like, with means for disengageable retention of the disc, generally designated by the reference numeral 1, comprises a containment body 2, which advantageously can have the traditional tray-like shape and defines internally at least one recess 3 in which it is possible to accommodate a disc, generally designated by the reference numeral 4 and constituted for example by a CD, a DVD or equivalent media; the recess 3, in the illustrated example, is arranged in a recessed region 8, which has an oval shape; of course, the recessed region might have another shape or might not be present.

The recess 3 defines peripheral contact regions for the disc, which are constituted for example by a peripheral abutment rim 10 arranged substantially circumferentially, and by a central protrusion 11, arranged at the central retention means, generally designated by the reference numeral 20 and constituted by a hub element of a per se known type.

Advantageously, the rim 10 is flanked, along a certain extent, in the wider part of the recessed region 8, by a containment rim 15, which is designed to prevent access to the peripheral region of the disc.

The central retention means have the peculiar characteristic that they can oscillate with respect to the bottom of the recess, and for this purpose a slot 30 is provided which is substantially V-shaped with a rounded vertex which surrounds the hub 20 proximate to its vertex.

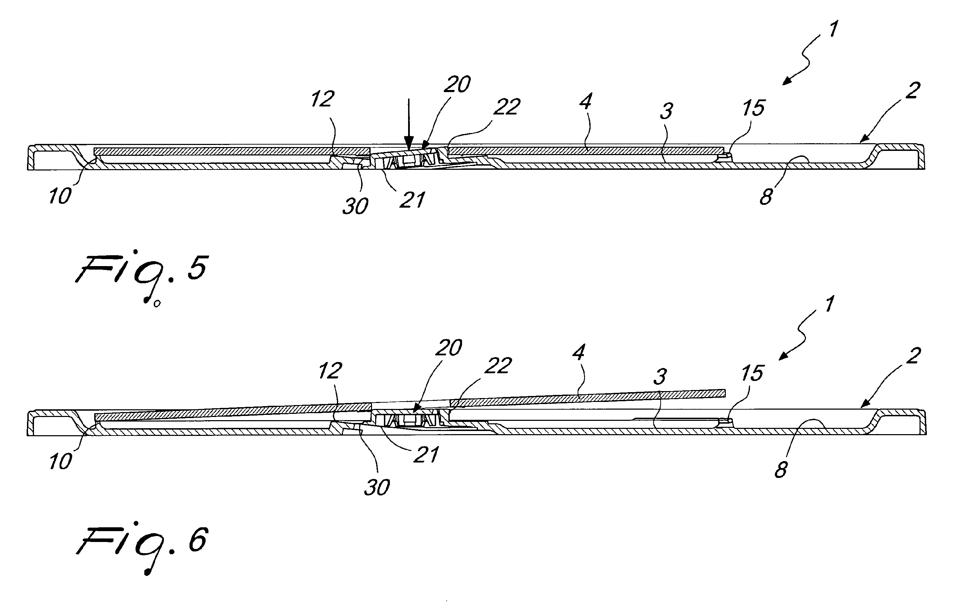

The presence of the slot 30 constitutes a certain elasticity for the portion that supports the hub, so that by pressing at the upper portion of the hub, the hub flexes, as shown in Figure 5, this being allowed by the fact that the slot 30 is provided, which in practice causes a separation from the bottom.

The hub 20, which has, at the free end of its lower face, an oblique cutout 21 to allow its free oscillation, disengages from the disc 4, which instead remains retained in position, since it abuts against the peripheral contact regions 10, and on a central contact region 12 which is laterally adjacent to the slot 30 on the opposite side with respect to the central contact element 11, which is defined on the portion which can oscillate thanks to the presence of the cutout 21.

It should also be noted that advantageously the hub has elastically flexible teeth 22 which affect only a portion of the peripheral region of the hub and advantageously do not affect the portion of the hub that lies proximate to the slot 30, thus allowing easy flexing of the oscillating portion without producing forcings on the central region of the disc, which can thus disengage freely due to the abutment provided by the peripheral contact region.

Moreover, the contact of the disc on the central contact region 12 prevents, during pushbutton actuation to perform release, the disc 4 from being affected by pressing actions.

With the arrangement described above, therefore, the disc can mate with the central retention means by a pressing action, as in traditional central hubs used in containers for CDs and the like.

Disengagement can be performed simply by acting on the hub, which by being arranged on a portion of the bottom which can oscillate, by virtue of pushbutton actuation, i.e., by pressing along a direction which is perpendicular to the plane formed by the recess, can disengage from the central hole and in practice can lift the disc 4 when the pressing action is released and the oscillating portion can rise again, pushing the disc upwardly, as shown in Figure 6.

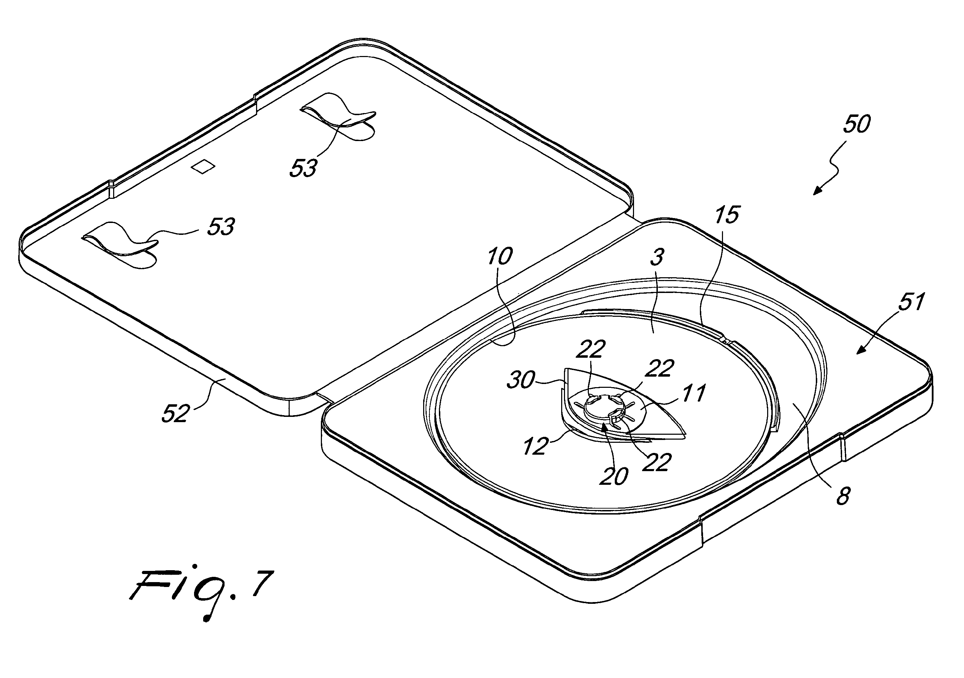

The central retention means can be used not only in a containment body which can be applied to a sleeve but also with a box-like element or case 50, shown in Figure 7, in which there is a base body 51 which has the previously described central retention means and is articulated to a closure lid 52 which has, for example, clips 53 for retaining a booklet and the like.

From what has been described above it is evident, therefore, that the invention achieves the proposed aim and objects, and in particular the fact is stressed that with particularly simple structural means, and in practice by using a traditional hub, it is possible to provide a container for CDs, DVDs and the like in which disengagement can be achieved with a pushbutton actuation at the central hub for retaining the disc.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application no. MI2007A000276, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A container for a disc and the like, with means for disengageable retention of the disc, comprising a containment body which has at least one recess which defines the region for accommodating a disc and contact regions for said disc, means for central retention of said disc being further provided, **characterized in that** said central retention means are supported by a portion which can oscillate with respect to the bottom of said recess for the disengagement of said central retention means from said disc with a pushbutton actuation on said central retention means.

2. The container according to claim 1, **characterized in that** said recess has at least regions for the peripheral contact of said disc.

3. The container according to the preceding claims, **characterized in that** said regions for peripheral contact of said disc are constituted by a peripheral abutment rim which is arranged substantially circumferentially.

4. The container according to one or more of the preceding claims, **characterized in that** it comprises a recessed region in which said recess is provided.

5. The container according to one or more of the preceding claims, **characterized in that** it comprises a containment rim which is flanked by at least one portion of said abutment rim.

6. The container according to one or more of the preceding claims, **characterized in that** it comprises a central protrusion which is arranged at said central retention means.

7. The container according to one or more of the preceding claims, **characterized in that** said oscillating portion is defined by a slot provided on the bottom of said recess.

8. The container according to one or more of the preceding claims, **characterized in that** said slot is substantially V-shaped, with said central retention means arranged proximate to the vertex of said V-shape.

9. The container according to one or more of the preceding claims,
**characterized in that** said V-shaped slot has a rounded vertex.

10. The container according to one or more of the preceding claims, **characterized in that** said central retention means comprise a hub which has elastically flexible teeth.

11. The container according to one or more of the preceding claims, **characterized in that** said elastically flexible teeth are omitted at the portion of said hub that is directed toward said vertex of said V-shaped slot.

12. The container according to one or more of the preceding claims, **characterized in that** said hub has, at its lower face, which lies opposite the disc insertion portion, an oblique cutout in order to allow oscillation.

13. The container according to one or more of the preceding claims, **characterized in that** it comprises a central contact region for said disc which is laterally adjacent to said slot, on the opposite side with respect to said hub, in order to prevent flexing of said disc upon actuation of said central retention means.

14. A box-like element for a disc and the like, with means for disengageable retention of the disc, comprising a base body which has at least one recess which defines the region for accommodating a disc and contact regions for said disc, a closure lid being articulated to said base body, means for central retention of said disc being further provided, **characterized in that** said central retention means are supported by a portion which can oscillate with respect to the bottom of said recess for the disengagement of said central retention means from said disc with a pushbutton actuation on said central retention means.
